# EUROPEAN PATENT APPLICATION

(11) **EP 4 679 042 A1**
(43) Date of publication of application: **14.01.2026**
(21) Application number: 24472013.2
(22) Date of filing: 11.07.2024
(51) Int. Cl.: G01G 19/42, G01G 19/56, G06Q 10/087, G07F 17/10

(54) **SYSTEM AND METHOD FOR DETERMINING THE AVAILABILITY AND QUANTITY OF GOODS BY MEANS OF INTERACTION BETWEEN VOICE COMMANDS AND MEASUREMENT OF THE CHANGES IN THE WEIGHT OF THE GOODS**

(71) Applicant: Stephanov Lolov, Christo, 1463 Sofia (BG)
(72) Inventor: Stephanov Lolov, Christo, 1463 Sofia (BG)

(57) **Abstract**

The invention is titled **System and method for determining the availability and quantity of goods by means of interaction between voice commands and measurement of the changes in the weight of the goods.**

The purpose of the invention is to be an accurate and easy-to-use system for tracking the number and quantity remaining of items (in grams or other standard units) thus enabling their inventarisation. The system has a wide range of uses within households as well as in industry.

A few sample usages of the invention are for it to be fitted in refrigerators, freezers, cupboards, shelves, racks, and pantries allowing access to their contents from afar. The invention could further be incorporated in medical cabinets, shelves in shelving units of supermarkets, racks in warehouses, assembly lines and others.

The invention solves the problem of the presence and quantity remaining of an item by a combination of voice commands and changes in the weight as reported by the plate(s) on which the item is placed.

## Description

### TECHNICAL FIELD OF INVENTION

### The invention is a System and method for determining the availability and quantity of goods by means of interaction between voice commands and measurement of the changes in the weight of the goods.

The purpose of the invention is to be an accurate and easy-to-use system for tracking the number and quantity remaining of items (in grams or other standard units) thus enabling their inventarisation. The invention will allow access to up-to-date information about the stored items from afar. It will show information about what type and how many items there are and what quantities were used through time.

A concrete application of the invention is fitting it in refrigerators, freezers, cupboards, shelves, racks, pantries, warehouses, assembly lines and others. Since the system allows collecting accurate information about the items in a storage space it also paves the way for other functionalities based on it. A few examples include an application for automatically placing orders when items fall below a particular threshold; reminding that a due date is upcoming; suggesting recipes based on available items; dynamically creating and adjusting nutrition plans based on what items have been consumed through time. In the rest of this document, we use a refrigerator in a household for the purposes of our examples, but the system has a wide range of uses within households as well as in industry. It can just as easily be fitted into medical cabinets, shelves in shelving units of supermarkets, racks in warehouses, assembly lines and others.

### PRIOR ART

With the current state of technology reliable, easy-to-use and intuitive inventarisation, accessible at low prices for home usage, is not a solved problem.

There are offerings on the market, which use cameras placed in refrigerators, which theoretically could distinguish what is being taken out or put inside based on an analysis of static or dynamic images (a video clip which is being analysed in real-time). These solutions, however, have a shortcoming that items within a refrigerator occlude one another. In addition, even when the systems can accurately determine an item, they are unable to recognise the brand. Even if they can recognise the brand, they are unable to determine accurately the remaining quantity of the item. Systems relying on a camera can, at best, determine the presence of an item, but not its quantity.

There are patents for refrigerators which use radio-frequency identification (RFID). This technology consists of two parts, one or more antennas in the refrigerator and one or more tags attached to items or their containers. However, such an approach is also unable to determine the remaining quantity of items. Another shortcoming of this technology is that certain materials, for example metals, can absorb the response coming from other items. This leads to the same occlusion problem faced by cameras. For example, the addition of one item can confuse the system in such a way as for it to believe that another item has been removed.

There are barcodes and barcode readers, but they require repeated manual scanning of the barcode every time an item is put in or taken out. This technology, although more reliable than cameras or RFID, not only does not determine the remaining quantity of the item, but also adds enough effort to the process of inventarisation to such an extent that in the end no customer wants to use it.

There are inventions which allow the control of refrigerators (and other home appliances) through voice. It is important to note, however, that these inventions control the core functionalities of the appliances, for example temperature, but not inventarisation.

In summary, there is no solution which is easy-to-use, intuitive, accurate and fast enough to allow a customer not only to determine the presence of an item, but also its remaining quantity. In other words, there is a lack of a system and method for reliable inventarisation under home conditions.

### TECHNICAL DETAILS OF THE INVENTION

The invention solves the problem with determining the quantity remaining by measuring the weight of the item via the plate on which it is placed. For example, such a plate could be at the bottom of any of a shelf, rack, or cupboard. When the shelf, rack or cupboard is fitted with such a plate, or it is placed upon a plate, or changed with such a plate, it becomes a defacto scale. When this scale is connected to a computer then monitoring the change of quantity of the item becomes straightforward. For the purposes of the explanation, we use plates which measure weight through compression (in other words the item presses on the plate), but the plates could measure the weight through tension (in other words the items can pull on the plate).

The invention solves the problem of the presence of an item by a combination of voice commands and changes in the weight as reported by the plates. Voice commands are more reliable than image analysis, easier to use than barcode readers and do not depend on the materials of the items. Because of its approach, the system has the additional benefit that it can also be retrofitted, for example, in already bought refrigerators, freezers, cupboards, racks, or shelves.

Another benefit of this system is that it allows the customer to save the quantities of items in a local database which they can access directly.

By placing plates on each shelf accurate localisation of items can be achieved. For example, if the weight on a particular plate has changed, we know that the item must have been placed on that shelf and not on any other. A simpler approach would be to place the whole refrigerator on a plate. We use a refrigerator in the example, but either approach can be used in other forms of storage. For example, if we would like to fit the system in a cupboard hanging from a wall, then the plate would be fitted between the wall and the cupboard.

By using a single plate, the quantity of hardware becomes constant and does not vary based on the number of shelves in the storage unit.

### EXAMPLE ASSEMBLY

### 1. Hardware components

- The prototype of the system consists of a plate or multiple plates (1), where each one has one or more load cells (2). The load cells are used to determine how the weight on the plate changes. The load cells are attached to one or more readers (3). All readers are connected to a multiplexer (4). A multiplexer is a device which allows multiple other devices to be addressed one by one. There is a luminosity sensor (5) also attached to the multiplexer. This type of sensor can help with determining the amount of light in the fridge. The multiplexer is connected to a small computer (6). The computer has a microphone (7) and an audio output (8).
- The above list is a sample assembly of components which would make the system work. The arrangement and components can be changed in multiple ways and what is important is the functionality they provide rather than the instances used in the sample assembly or arrangement. Here are a few examples:
   o Load cells - the load cells can be replaced with another type of sensor which determines weight or from the readings of which the weight can be inferred **("weight sensor")**
   ∘ Multiplexer - the reason the current prototype uses a multiplexer is because the readers share the same address and without a multiplexer they would not be individually addressable. The important part here is that there is **"a way that the computer can get the weight information for each plate".** If there is a way to address the readers directly then the multiplexer is extraneous.
   ∘ Luminosity sensor - the current prototype uses a luminosity sensor so that it can detect when a person expresses the intent to use the system. We use a luminosity sensor because one of the ways a person can express their intent to use the system is by opening the door of the compartment, which leads to a change in the light present in the compartment. In place of a luminosity sensor one could use a button (similar to the button that refrigerator doors press when closed), an electrical signal (similar to the electrical circuit completing when the refrigerator light switches on), proximity sensor and others. The important part here is that there is **"a way to obtain information that a person would like to interact with the system".**
   ∘ Device which controls the system - a small computer (has an operating system) was used for the prototype, which allows all software components to be local to the device. There is nothing preventing the software components to be ran remotely or for the computer to be exchanged with a microcontroller (does not have an operating system). The important part here is that there is **"a device which controls the system".**

### 2. Software components

- In the prototype, the computer which controls the system has a few software components. Firstly, it has a peer-to-peer virtual private network (9) which allows devices to communicate with one another directly without the need for a rendezvous server through which their traffic passes. It further allows such communication without the need to configure routers or other network components. The computer has a module for sound analysis (10) which allows for the intent from an audio recording to be extracted and analysed. This module has been trained to recognise commands such as "add {number} {item}", "remove {number} {item}" and "redo {item1} {item2}". The computer further has a module which turns on recording through the microphone when it detects that the quantity of light has changed because the compartment has been opened. Furthermore, this module silences the microphone when commands are repeated by the system to avoid a feedback loop. There is also a module which tracks the changes in items based on the relationship between weight changes and voice commands (11).
- The above list of software components is for the prototype in its current state. Similarly to the hardware components these can be changed and what is important is the functionality which they provide. A few examples of changes are:
   ∘ Peer-to-peer virtual private network - the peer-to-peer virtual private network is used so that a customer does not need to go through the computer servers of a particular company to access information that the device has gathered. The important part here is that there is **"a module that allows connecting to the system remotely".**
   ∘ Module for determining intent from an audio recording - in most applications today the module for determining intent first transcribes the audio into text and then tries to analyse the text to determine what the customer wants. Furthermore, such applications tend to reside on remote devices different to the device on which the audio was recorded and they establish this connection via the Internet. The module used in the prototype aims to determine intent directly from the audio recording without transcribing it and to reside locally on the device. This allows for the interaction with the system to be quicker and more accurate. The important part here is that there is **"a module which determines intent from an audio recording".**

### USE OF THE INVENTION

A concrete application of the invention is for it to be used within refrigerators, freezers, shelves, racks, warehouses, assembly lines and others so that the customer can gradually build up and track inventory from afar.

A few sample interactions with the system are as follows:
1. A customer opens the refrigerators which leads to a change in light. This in turn leads to the microphone enabling recording.
2. The customer places an item in the refrigerator without saying anything. The refrigerator determines that something has been placed due to the change in weight. It "says" that it has detected an unknown item.
3. The customer uses the command "add {number} {item}" and the refrigerator associates the item with the weight.

1. A customer opens the refrigerator which leads to a change in light. This in turn leads to the microphone enabling recording.
2. The customer removes an item without saying anything. The refrigerator determines that something has been removed due to the change in weight. Since the refrigerator has a list of previously associated items with their weight, it finds the closest item by weight and "says" that it has been removed.
3. If there were two items of a different type, but same weight it is possible that the refrigerator "says" it has removed the wrong item. In such situations the customer can use the command "redo {item1} {item2}" which leads to the refrigerator correcting which item has been removed.

1. A customer opens the refrigerator which leads to a change in light. This in turn leads to the microphone enabling recording.
2. The customer uses the command "add {number} {item}". The refrigerator records the intent and waits for a change in weight.
3. The customer places an item in the refrigerator. The refrigerator determines that something has been placed due to the change in weight and associates said item with the memorised command.

1. A customer opens the refrigerator which leads to a change in light. This in turn leads to the microphone enabling recording.
2. The customer uses the command "remove {number} {item}". The refrigerator records the intent and waits for a change in weight.
3. The customer removes an item from the refrigerator. The refrigerator determines that something has been removed due to the change in weight and associates said item with the memorised command.

The above four situations showcase how a customer would gradually build up their inventory.

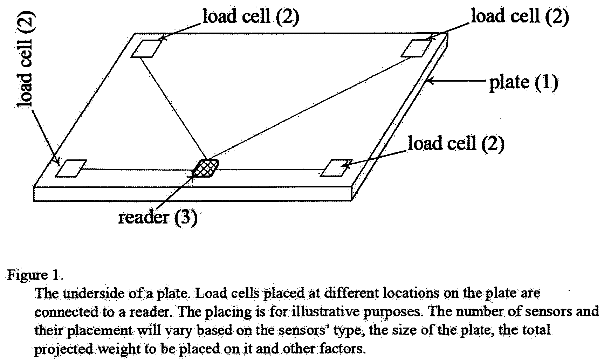

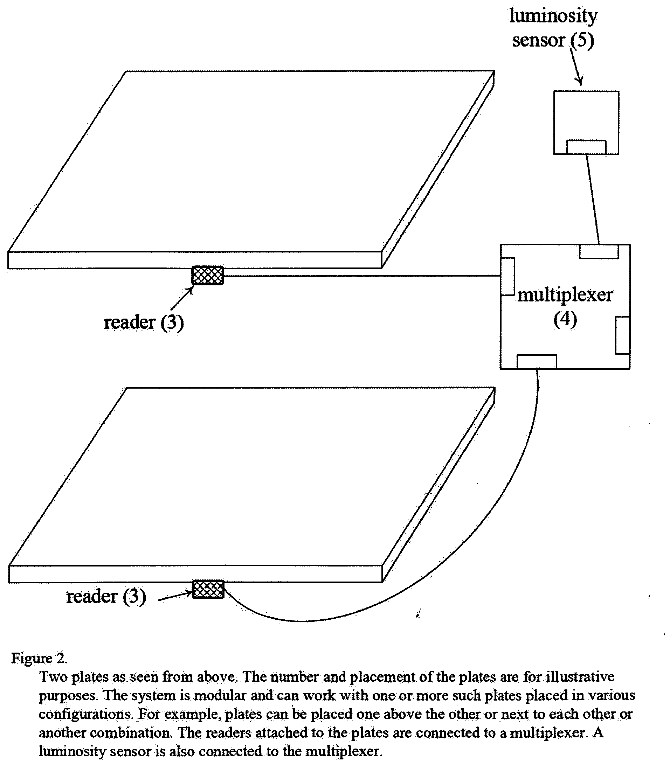

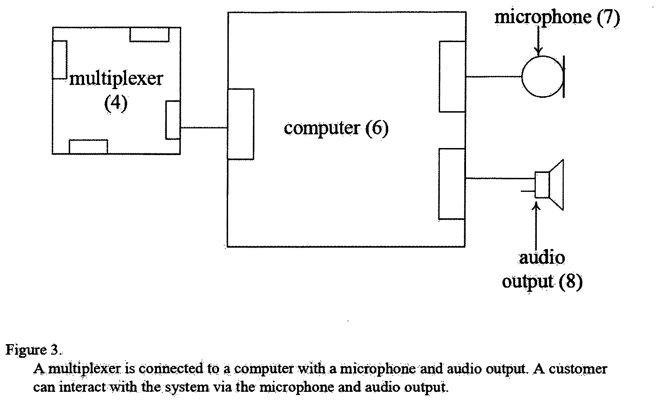

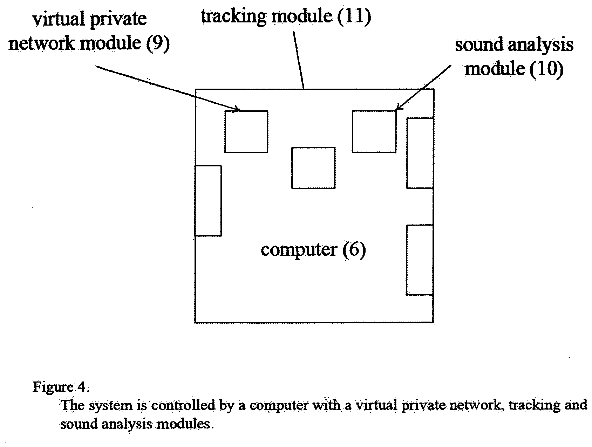

## Claims

1. System and method for determining the availability and quantity of goods by means of interaction between voice commands and measurement of the changes in the weight of the goods, consisting of:
(I) **HARDWARE COMPONENTS, characterised by** that they include one or more plates,
(1) to each of which one or more load cells are attached
(2) the load cells are attached to one or more readers
(3) the readers are attached to a (4) multiplexer, if necessary, which allows individual readers to be addressed
(5) there is a sensor which is used to determine that the customer intends to use the system
(6) the multiplexer, if present, is attached to a device used to control the system.
The device used to control the system has
(7) a microphone
(8) an audio output.
(II) **SOFTWARE COMPONENTS, characterised by**:
(9) a module, which allows to remotely connect to the system;
(10) a module for audio recording and analysis allowing for the extraction of intent; the module further turns the microphone on whenever the system detects the user wants to use it;
(11) a module which monitors for changes in items based on interactions between changing weight and voice commands;

2. System and method for determining the availability and quantity of goods by means ofinteraction between voice commands and measurement of the changes in the weight ofthe goods, in accordance with claim 1, **characterised by** the fact that the weight sensors (2) are load cells or other sensors from which weight can be inferred.

3. System and method for determining the availability and quantity of goods by means of interaction between voice commands and measurement of the changes in the weight of the goods, in accordance with claim 1, **characterised by** the fact that the sensor used in (5) is a luminosity sensor or other sensors which would determine the customer's intent to use the system.

4. System and method for determining the availability and quantity of goods by means of interaction between voice commands and measurement of the changes in the weight of the goods, in accordance with claim 1, **characterised by** the fact that the controlling unit in (5) is a small computer with an operating system.

5. System and method for determining the availability and quantity of goods by means of interaction between voice commands and measurement of the changes in the weight of the goods, in accordance with claim 1, **characterised by** the fact that to remotely connect to the device (9) a network is used, an example of which is a peer-to-peer virtual private network.

6. System and method for determining the availability and quantity of goods by means of interaction between voice commands and measurement of the changes in the weight of the goods, in accordance with claim 1, **characterised by** the fact that the audio module (10) does not need to transcribe audio to infer intent of commands such as *"add {number} {item}", "remove {number} {item}" and "redo {item1} {item2}".*
